Europäisches Patentamt

European Patent Office

Office européen des brevets

(11) Publication number: **0 026 655**
A1

(12) # EUROPEAN PATENT APPLICATION

(21) Application number: 80303400.8

(22) Date of filing: 26.09.80

(51) Int. Cl.³: **C 08 F 10/00**
C 08 F 4/64

(30) Priority: 01.10.79 GB 7933918
15.08.80 GB 8026767

(43) Date of publication of application:
08.04.81 Bulletin 81/14

(84) Designated Contracting States:
BE DE FR GB IT NL

(71) Applicant: IMPERIAL CHEMICAL INDUSTRIES LIMITED
Imperial Chemical House Millbank
London SW1P 3JF(GB)

(72) Inventor: Parsons, Ian William
96 Presthope Road Selly Oak
Birmingham(GB)

(72) Inventor: Licchelli, John Andrew
"Penmar" Church Road California
Falkirk Stirlingshire SK1 2BD(GB)

(72) Inventor: Caunt, Anthony David
1 Templewood
Welwyn Garden City Hertfordshire(GB)

(74) Representative: James, David Gomer et al,
Imperial Chemical Industries Limited Legal Department:
Patents Thames House North Millbank
London SW1P 4QG(GB)

(54) Titanium halide material and production thereof.

(57) A titanium halide material has the composition $TiCl_y xMgCl_2$ where y is 1.2 to 2.9, typically 1.5 to 2.2, and x is at least 4, preferably between 6 and 10. The material may have a surface area in excess of 200 $m^2/g$ and a porosity in excess of 0.40 $cm^3/g$. This material can be prepared by premixing titanium tetrachloride with a halocarbon compound which may contain hydrogen, for example carbon tetrachloride, reacting the mixture with an organo-magnesium compound, optionally separating and drying the solid product and thereafter treating this product with titanium tetrachloride. The transition metal composition can be used as a component of an olefin polymerisation catalyst to give a high yield of a polyolefin such as polyethylene or polypropylene.

EP 0 026 655 A1

Croydon Printing Company Ltd.

## TITANIUM HALIDE MATERIAL AND PRODUCTION THEREOF

The present invention relates to titanium halide materials, the preparation of such materials and their use as components of catalyst systems for the polymerisation of olefin monomers, particularly propylene.

British Patent Specification 1 286 867 discloses and claims a catalyst system for olefin polymerisation which includes the product obtained by contacting a titanium tetrahalide with a support comprising an anhydrous magnesium halide in an active form. Subsequent to this patent, there have been many proposals for olefin polymerisation catalyst systems including a transition metal composition supported on a magnesium halide. There have also been proposals to use catalyst systems based on the reduction product of a transition metal compound such as titanium tetrachloride with an organo-magnesium compound, see for example British Patent Specification 1 299 862.

According to one aspect of the present invention there is provided a titanium halide material having the composition $TiCl_y \cdot xMgCl_2$ wherein

y has a value of 1.2 to 2.9; and

x has a value of at least 4.

In this composition, the value of y may be in the range 1.5 to 2.2 and typically approximates to 2.0. It is preferred that x is at least 6 and it is also preferred that x is not more than 10.

The titanium halide material is a solid which is typically in the form of discrete, secondary particles which are essentially spherical and are agglomerates of smaller primary particles having a particle size which is such that essentially all the secondary particles have a diameter which is typically from 2 microns up to 30 microns.

The material typically has a high surface area and a high porosity. The surface area is the surface area of one gramme of the titanium halide material, the surface area having been measured using the technique of BS 4359/1. The porosity is the pore volume of pores of diameter less than 300Å as measured by nitrogen adsorption using the technique described in "Advances in Catalysis", (1957), Vol IX, pages 143 to 154. The surface area of the titanium halide material is typically at least 200 $m^2$/g, and may be in excess of 300 $m^2$/g, for example up to 400 $m^2$/g. The porosity of the titanium halide material typically is at least 0.40 $cm^3$/g and may be in excess of 0.50 $cm^3$/g, for example up to 0.70 $cm^3$/g. The colour of the titanium halide material varies and is typically violet, although it may be darker in colour, for example a blue-black colour.

Titanium halide materials, including materials of the type hereinbefore described, may be prepared from titanium tetrachloride by reaction with an organo-magnesium compound under specific conditions.

Thus, according to a further aspect of the present invention, there is provided a process for the preparation of a titanium halide material which process comprises
1) forming a mixture of titanium tetrachloride and a halocarbon compound, which may optionally contain hydrogen, the proportion of halocarbon being at least 10% by volume of the total volume of the mixture; 2) reacting this mixture with an organo-magnesium material;
3) treating the reaction product with titanium tetrachloride; and 4) separating a solid product from the titanium tetrachloride.

It is preferred to include an additional stage between stages 2) and 3) wherein a solid reaction product is separated from the reaction mixture of stage 2), drying this solid reaction product and then subjecting the dried solid reaction product to stage 3).

The halocarbon compound is conveniently one in which the halogen is chlorine. The halocarbon compound preferably contains at least three halogen atoms attached to one carbon atom and very preferably contains only carbon and halogen atoms. Examples of the halocarbon compound are chloroform and hexachloroethane and particularly useful results have been obtained using carbon tetrachloride. The proportion of halocarbon compound in the mixture with titanium tetrachloride is preferably at least 25% by volume and useful results have been obtained by forming a mixture containing between 50 and 80% by volume of the halocarbon compound. It will be appreciated that the optimum quantity of halocarbon compound which is used is dependent on a number of factors including the nature of the particular halocarbon compound, the type of organo-magnesium material which is reacted with the mixture and the proportion of the organo-magnesium material which is used.

The mixture of titanium tetrachloride and the halocarbon compound is conveniently formed by mixing the two materials together in the absence of any solvents such as aliphatic hydrocarbon liquids. Thus, the mixing is conveniently effected at a temperature at which both materials are in the liquid state and a suitable temperature for effecting the mixing is ambient temperature (15-30°C), although lower or higher temperatures can be used if desired.

The organo-magnesium material which is reacted with the mixture of titanium tetrachloride and the halocarbon compound may be a dihydrocarbyl magnesium compound, a hydrocarbyl magnesium halide compound or a mixed magnesium aluminium hydrocarbyl compound. Preferably the magnesium compound is soluble in hydrocarbon solvents. Examples of suitable organo-magnesium materials include magnesium dibutyl, which is preferably a mixture of n-butyl and sec-butyl magnesium, magnesium didodecyl, octyl magnesium
bromide, octyl magnesium chloride and magnesium aluminium
ethyl compositions such as, for example, $Mg(AlEt_4)_2$.
The organo-magnesium material may have associated with it
a Lewis Base compound such as an ether but it is preferred
that any such Lewis Base is present in a relatively small
proportion, for example less than 0.4 mole for each mole
of the organo-magnesium material.  The proportions of the
organo-magnesium material which are reacted with the
mixture of titanium tetrachloride and the halocarbon
compound may be varied over a considerable range. Thus,
it is possible to react the organo-magnesium material with
a substantial excess of the mixture but it will be
appreciated that, with an appropriate adjustment of the
proportions of the components of the mixture, the organo-
magnesium material may be added in a quantity sufficient
to give essentially complete reaction of the components of
the mixture.

The reaction of the organo-magnesium material with
the mixture is conveniently, but not necessarily, effected
by adding the organo-magnesium material to the mixture.
The organo-magnesium material is conveniently used as a
solution in a suitable inert solvent, particularly an
aliphatic or aromatic solvent such as hexane, heptane or
toluene.  The reaction is conveniently effected at ambient
temperature but, depending on the reactants, particularly
the halocarbon compound, higher or lower temperatures may
be used.  When the halocarbon compound is carbon
tetrachloride, elevated temperatures of 70°C, or even
higher, may be used.  The reaction of the organo-magnesium
material with the mixture is conveniently effected by
stirring all the materials together at the desired
reaction temperature for a period of at least 5 minutes,
preferably for at least 30 minutes and, in general, it is
not necessary to use a time in excess of four hours.

The product of the reaction between the organo-magnesium material and the mixture contains a solid product which is typically brownish in colour. This solid product contains magnesium, titanium and halogen. The solid product, or the reaction mixture containing the solid product, is then treated with titanium tetrachloride. The treatment with titanium tetrachloride can be effected by mixing the solid product, or the reaction mixture containing the solid product, with the titanium tetrachloride. The treatment is conveniently effected using neat titanium tetrachloride. If the preferred, optional separation and drying stage has been effected, the treatment is conveniently effected by suspending the dried solid product in neat titanium tetrachloride. The treatment is preferably effected at a temperature of at least 60°C and temperatures of up to 150°C can be used. It is particularly preferred to use a treatment temperature in the range 80°C up to 120°C. The treatment is conveniently effected by mixing the solid product and the titanium tetrachloride at ambient temperature and thereafter heating the mixture to a temperature of at least 60°C. The time of the treatment is dependent on the temperature used and conveniently the temperature of at least 60°C is maintained for at least 30 minutes up to 24 hours, for example 1 to 5 hours. During the course of the treatment with titanium tetrachloride, the colour of the solid product will usually undergo a change to a red/violet, or even darker, colour.

The product obtained is finally separated from the titanium tetrachloride, for example by filtration or decantation. To remove any adsorbed titanium tetrachloride from the solid material, the material may then be washed several times or may be subjected to a drying process, or may be subjected to both procedures.

In the preferred, optional additional stage, the solid reaction product obtained in stage 2) is separated and dried. The solid reaction product is separated from the reaction mixture of stage 2) by any suitable technique, for example by filtration or decantation. It is preferred that the solid product is then washed several times to remove any residual unreacted materials from the solid. The solid is then dried and this drying may be effected either by passing a stream of an inert gas such as nitrogen or argon through the solid, conveniently at ambient temperature, although lower or higher temperatures (for example up to 120°C) may be used, or by heating the material at a moderate temperature, preferably not exceeding about 60°C, at a reduced pressure, for example not greater than about 10 mm mercury. The drying is preferably effected for several hours, for example 2 to 24 hours. Adequate drying can usually be achieved by passing a stream of nitrogen at ambient temperature through the solid for a time of 16 hours. It is preferred that the drying is sufficient to give a free-flowing powder.

A Lewis Base compound may be incorporated into the titanium halide material at one or more of the various stages during the preparation of the material. Thus, the reaction between the mixture of the halocarbon and the titanium tetrachloride with the organo-magnesium compound may be effected in the presence of a Lewis Base compound, which may be present as a liquid medium in which the reaction occurs, or dissolved in the liquid reaction medium or complexed with one or more of the reagents used in the reaction. Alternatively, the Lewis Base compound may be added subsequent to the production of the reaction product, either before or after the treatment with the titanium tetrachloride or before or after the optional drying step. The Lewis Base compound may be added by suspending the reaction product in a liquid medium which is, or which contains, the Lewis Base compound and stirring the mixture at any convenient temperature, typically not more than 100°C, for a length of time sufficient for at least some of the Lewis Base compound to be incorporated into the reaction product. An alternative procedure for incorporating a Lewis Base compound into the reaction product when the reaction product is a solid is to grind this solid in the presence of the Lewis Base compound.

The Lewis Base compound which may be incorporated into the titanium halide material can be any Lewis Base compound, especially organic Lewis Base compound, which has previously been proposed for use in an olefin polymerisation catalyst system. Thus, the Lewis Base compound may be an ether, an ester, a ketone, an alcohol, an ortho-ester, a thioether, a thioester, a thioketone, a thiol, a sulphone, a sulphonamide, a fused ring compound containing a heterocyclic sulphur atom, an organic silicon compound such as a silane or siloxane, an amide such as formamide, urea and the substituted derivatives thereof such as tetramethylurea, thiourea, an alkanolamine, an amine, a cyclic amine such as pyridine or quinoline, a diamine such as tetramethylethylenediamine or an organic phosphorus compound such as an organic phosphine, an organic phosphine oxide, an organic phosphite or an organic phosphate. The use of organic Lewis Base compounds is disclosed, inter alia, in British Patent Specifications 803 198, 809 717, 880 998, 896 509, 920 118, 921 954, 933 236, 940 125, 966 025, 969 074, 971 248, 1 013 363, 1 017 977, 1 049 723, 1 122 010, 1 150 845, 1 208 815, 1 234 657, 1 324 173, 1 359 328, 1 383 207, 1 423 658, 1 423 659 and 1 423 660.

Titanium halide materials in accordance with the present invention are conveniently prepared by a process which comprises

1) forming a mixture of titanium tetrachloride and carbon tetrachloride in which the carbon tetrachloride forms from 25 up to 80% by volume of the total volume of the mixture;

2) adding to the mixture a solution, in an inert liquid, of a dihydrocarbyl magnesium compound to give reaction with the components of the mixture;

3) separating from the reaction mixture a solid reaction product, washing and drying the said solid reaction product;

4) suspending the dried solid reaction product in undiluted titanium tetrachloride and heating the suspension to maintain a temperature in the range 80 to 120°C for 1 to 5 hours; and

5) separating the solid from the titanium tetrachloride and washing the solid to remove adsorbed titanium tetrachloride.

The titanium halide material is suitable for use as a component of an olefin polymerisation catalyst, and for this purpose may be used in the absence of any suspending medium or may be suspended in a suitable inert hydrocarbon material such as hexane or a mixture of dodecane isomers and in either case can then be used together with other compounds which are known for this purpose, to effect the polymerisation of an olefin monomer.

As a further aspect of the present invention there is provided an olefin polymerisation catalyst system which is obtained by mixing together 1) a titanium halide material containing titanium, magnesium and halogen atoms as hereinbefore described; and 2) at least one organo-metallic compound of aluminium, or of a non-transition metal of Group IIA of the Periodic Table, or a complex of an organo-metallic compound of a non-transition metal of Group IA or IIA with an organo-metallic compound of aluminium.

The organo-metallic component of the catalyst system is conveniently an organo-aluminium compound and is particularly an organo-aluminium compound containing only hydrocarbyl groups. Thus, suitable organo-aluminium compounds include triethyl aluminium, tributyl aluminium and trioctyl aluminium.

In addition to the titanium halide material and the organo-metallic compound, the catalyst system can contain other components such as are known in the art. Typically the catalyst system may include at least one Lewis Base component. The Lewis Base component may be one of the many Lewis Base compounds which have been proposed for this purpose and which affect the activity and/or stereospecificity of the Ziegler polymerisation catalyst system. Thus, the Lewis Base compound may be an ether, an alcohol, a ketone, an ester, a thioether, a thioketone, a thiol, a thioester, a sulphone, a sulphonamide, a fused ring compound containing a heterocyclic sulphur atom, an amine, an amide, an organic silicon compound such as a silane or a siloxane or an organic compound of phosphorus, such as an organic phosphine, an organic phosphine oxide, an organic phosphite or an organic phosphate. Useful catalyst systems can be obtained by using, as the Lewis Base component, esters, particularly aromatic esters such as ethyl benzoate and ethyl anisate.

The catalyst system may also include other components which affect the characteristics of the system, particular examples of which are the cyclic polyenes such as cycloheptatriene, cyclooctatetraene, cyclooctatriene and the derivatives thereof including the alkyl- and alkoxy-substituted derivatives; tropylium salts and complexes; tropolone and tropone.

The proportions of the various catalyst components can be varied quite widely as is known in the art. Typically, the amount of the organo-metallic compound will be at least 1 mole for each gramme atom of titanium which is present in the titanium halide material. Preferably the amount of the organo-metallic compound does not exceed 1000 moles for each gramme atom of titanium and it is particularly preferred that the amount of the organo-metallic compound does not exceed 100 moles for each gramme atom of titanium. If the catalyst system includes a Lewis Base component, this is conveniently present in an amount of from 0.1 up to 1.0 mole for each mole of the organo-metallic component of the catalyst system. Any polyene which may be present in the catalyst system is preferably present in an amount of not greater than the molar proportion of the organo-metallic component of the catalyst system.

The catalyst components may be mixed together in the presence or absence of the olefin monomer, or monomer mixture, which is to be polymerised. If mixing is effected in the presence of the monomer, or monomer mixture, to be polymerised, it is preferred either that the amount of monomer, or monomer mixture, present is relatively small whereby only a small proportion of polymer is formed, for example up to 10 moles for each gramme atom of titanium, or alternatively that the mixing is effected in the polymerisation vessel. If the catalyst is obtained by mixing together more than two components, it may be convenient to pre-mix some of the catalyst components and complete the mixing in the polymerisation vessel. In effecting the mixing of the catalyst components, it is preferred that any Lewis Base compound which is present is added to the titanium halide material only in the presence of the organo-metallic compound which is component 2) of the catalyst. Any Lewis Base compound which is present may be pre-mixed with the organo-metallic compound which is component 2) of the catalyst and this mixture may then be mixed with the titanium halide material, conveniently within the polymerisation vessel.

Catalyst systems obtained in accordance with the present invention are suitable for the polymerisation and copolymerisation of olefin monomers.

Thus, as a further aspect of the present invention there is provided a process for the production of a polymer or copolymer of an olefin monomer wherein at least one olefin monomer is contacted under polymerisation conditions with an olefin polymerisation catalyst as hereinbefore defined.

Any olefin monomer which is capable of being polymerised using a Ziegler catalyst system may be polymerised by the process of the present invention. Thus, monomers which can be polymerised by the present process include ethylene, butene-1, hexene-1 and 4-methylpentene-1 and particularly propylene. These olefins, for example ethylene and a minor proportion of butene-1 or hexene-1, may be copolymerised together. A particularly preferred copolymerisation is that of propylene with a minor proportion of ethylene, conveniently using a sequential polymerisation process such as is described in British Patent Specifications 970 478; 970 479 and 1 014 944.

The process of the present invention is particularly useful for the polymerisation of propylene to give a high yield of polymer relative to the amount of transition metal composition used.

It is well known that catalysts of the "Ziegler" type, such as the present catalyst system, are susceptible to the effects of impurities in the reaction medium. Thus, the activity and stereospecificity of the catalyst can be effected by the presence of small quantities of impurities, particularly oxygen and polar compounds such as water and alcohol, in the monomer and any diluent which may be used. Hence, it is desirable to use pure monomers and diluents and with catalysts of high activity it is especially desirable to use materials having a high degree of purity. Accordingly, rather than using materials of commercial purity, it may be found desirable to purify these further. The purification may be effected in more than one stage if desired and the particular purification treatment used will be dependent on the purity of the starting materials. Satisfactory purity can be achieved in most cases by passing the monomer, and any diluent which may be used, through a bed of a material which is capable of absorbing the impurities contained in the monomer or diluent. Suitable techniques of achieving a satisfactory purity are described in British Patent Specifications 1 111 493 and 1 226 659. The level of impurities in the monomer or diluent are preferably less than a total of 20 ppm (parts per million) by weight and in particular it is preferred that the monomer contains less than 1 ppm by volume of water and less than 1 ppm by volume of oxygen.

The polymerisation process can be carried out in the presence or absence of an inert diluent such as a suitably purified paraffinic hydrocarbon. If a diluent is not used for the polymerisation, an excess of liquid monomer can be used as the suspension medium for the catalyst and polymer product. Alternatively, polymerisation can be effected using a gaseous monomer in contact with the solid phase comprising the catalyst system and the polymer product, such a process being effected using any technique which is suitable for carrying out a gas solid reaction, for example a fluidised bed reactor system, a stirred bed reactor system or a ribbon blender type of reactor.

The polymerisation process may be effected either in a batch manner or on a continuous basis. The catalyst components may be introduced into the polymerisation vessel separately but it may be preferred, particularly if polymerisation is being effected on the continuous basis, to premix all of the catalyst components together before they are introduced into the polymerisation reactor. However, as noted, if the catalyst system contains a Lewis Base component, it is preferred to pre-mix the Lewis Base compound with the organo-metallic component of the catalyst system before the titanium halide material is added to complete the catalyst system.

The polymerisation can be effected under conditions of temperature and pressure which have been used previously for olefin polymerisation processes. Thus, the polymerisation may be effected at temperatures of 0°C and upwards, for example up to 250°C. However, for the polymerisation of propylene, it is preferred to operate at moderately low temperatures and thus temperatures in the range from 40°C up to 100°C, preferably not more than about 80°C are preferred. The polymerisation is conveniently effected at an elevated pressure which is typically not more than 100 kg/cm$^2$, and especially is in the range from 5 up to 40 kg/cm$^2$.

The polymerisation can be effected in the presence of a chain transfer agent such as a zinc dialkyl or particularly hydrogen, in order to control the molecular weight of the product formed. The proportion of the chain transfer agent will be dependent on the polymerisation conditions and in particular on the polymerisation temperature, and for the polymerisation of propylene is typically not more than 5% molar relative to the amount of monomer, and particularly is in the range from 0.01 up to 2% molar relative to the monomer or monomers. However, if the monomer being polymerised is ethylene, or a mixture in which ethylene is the major polymerisable component (by moles), the amount of hydrogen used may be greater, for example in the homopolymerisation of ethylene the reaction mixture may contain in excess of 50% molar of hydrogen, whereas if ethylene is being copolymerised, a proportion of hydrogen which is typically up to 35% molar may be sufficient.

It will be appreciated that the preparation of the transition metal composition, the production of the polymerisation catalyst and the olefin polymerisation process are effected in an inert atmosphere which is conveniently nitrogen which is essentially free from impurities such as oxygen and water vapour.

Various aspects of the present invention will now be described with reference to the following Examples which are illustrative of the invention. In the following Examples all the operations were effected under an atmosphere of nitrogen unless otherwise indicated. The nitrogen used was White Spot grade from the British Oxygen Company which had been further purified by passing through a column containing BASF catalyst R3-11 (cupric oxide reduced to finely-divided metallic copper on a magnesium oxide support) and then through a column containing pellets of Union Carbide 4A molecular sieve, all stages being effected at ambient temperature.

### EXAMPLES 1 TO 4

To 30 $cm^3$ of titanium tetrachloride was added carbon tetrachloride in the amounts indicated in Table 1. To the mixture obtained were slowly added 25 $cm^3$ of a 0.625 molar solution of a mixture of magnesium dibutyl isomers (in approximately equimolar quantities of n-butyl and sec-butyl groups) in an isoparaffin fraction, essentially all of which had a boiling temperature in the range 117°C to 135°C whilst stirring the mixture. The addition of the magnesium dibutyl was effected at ambient temperature over a period of one to two minutes, stirring of the reaction mixture was continued for 45 minutes and was then terminated.

The solid was allowed to settle and the liquid phase was filtered off. The solid was then washed 3 times using 100 $cm^3$ of n-heptane at ambient temperature for each wash. For comparative purposes, a sample corresponding to about half of the washed solid was suspended in 100 $cm^3$ n-heptane and tested without further treatment.

The remaining half of the solid was thoroughly dried by passing a stream of nitrogen, at ambient temperature, through the solid at a rate of 15 litres/hour for 16 hours. The dried solid was then suspended in 30 $cm^3$ of titanium tetrachloride, the suspension was stirred and heated to a temperature of 120°C. The temperature of 120°C was maintained for 3 hours and then heating and stirring were terminated. The mixture was allowed to cool to ambient temperature and then filtered. The solid was then washed 3 times using 100 $cm^3$ of n-heptane at ambient temperature for each wash. The washed solid was then suspended in 100 $cm^3$ of n-heptane.

50 $cm^3$ aliquots of the suspensions obtained as described (a 25 $cm^3$ aliquot was used for Comparative Example B) were extracted with 6N aqueous sulphuric acid. The aqueous layers were then made up to 100 $cm^3$ by the addition of distilled water and subjected to elemental analysis for magnesium, titanium and chlorine.

Details of the preparation conditions, and the results of the analyses, are given in Table 1.

Table 1

| Example or Comp Example (a) | Amount $CCl_4$ ($cm_3$) | $TiCl_4$ Treatment (b) | Analysis (mg atoms/l) (c) | | | Empirical Formula (d) | |
|---|---|---|---|---|---|---|---|
| | | | Mg | Ti | Cl | y | x |
| A | 30 | NIL | 32.9 | 8.85 | 94.1 | 3.2 | 3.71 |
| 1* | 30 | YES | 25.0 | 3.67 | 57.6 | 2.1 | 6.81 |
| B | 10 | NIL | 15.5 | 6.68 | 47.1 | 2.4 | 2.32 |
| 2 | 10 | YES | 25.0 | 4.46 | 59.3 | 2.0 | 5.37 |
| C | 50 | NIL | 29.3 | 7.78 | 78.0 | 2.5 | 3.77 |
| 3 | 50 | YES | 25.3 | 3.03 | 56.9 | 2.1 | 8.35 |
| D | 100 | NIL | 38.5 | 8.69 | 101.0 | 2.8 | 4.43 |
| 4 | 100 | YES | 20.4 | 2.34 | 45.4 | 2.0 | 8.72 |

Notes to Table 1

(a) * indicates the valency state of titanium was checked by titration and confirmed to be essentially 2.

(b) NIL indicates that no treatment with $TiCl_4$ was effected.

YES indicates that the described treatment with $TiCl_4$ was effected.

(c) The values quoted represent the concentrations in the sulphuric acid solution.

(d) y and x are as defined for the composition $TiCl_y xMgCl_2$.

COMPARATIVE EXAMPLE E

A 300 $cm^3$ vessel with a stirrer and No. 2 porosity glass sinter for filtration was evacuated and filled with an atmosphere of dry hydrogen chloride gas. A positive pressure of hydrogen chloride was maintained in the apparatus throughout the experiment. 96 cm$^3$ of dry n-heptane were then added, followed by 3.4 cm$^3$ of titanium tetrachloride and this mixture was constantly stirred. 25 cm$^3$ of the 0.625 molar solution of the mixture of magnesium dibutyl isomers (as described for Examples 1 to 4) were added slowly and allowed to fall through the hydrogen chloride atmosphere before reaching the mixture of n-heptane and titanium tetrachloride. A brown precipitate was formed and a large temperature rise observed. The solid was filtered and washed three times with 100 cm$^3$ of n-heptane, the hydrogen chloride atmosphere being replaced by purging with pure nitrogen for the washing steps. The solid was finally suspended in 100 cm$^3$ of heptane.

### COMPARATIVE EXAMPLE F

Half the suspension obtained in Comparative Example E was filtered and the solid was dried by passing a stream of nitrogen at ambient temperature through the solid for 4 hours. The solid product was suspended in 30 cm$^3$ of titanium tetrachloride and heated at 120°C for three hours. The resulting violet solid was filtered, washed three times with 100 cm$^3$ of n-heptane and finally suspended in 50 cm$^3$ of n-heptane.

### COMPARATIVE EXAMPLES G, H, I AND J

Preparations similar to those described for Comparative Example A were caried except that the carbon tetrachloride was replaced by 10 cm$^3$ (Comparative Example G) or by 100 cm$^3$ (Comparative Example I) of silicon tetrachloride.

Samples of the solids obtained in Comparative Examples G and I were dried and treated with titanium tetrachloride as described for Example 1 except that the product of Comparative Example G was used to produce the product of Comparative Example H or the product of Comparative Example I was used to produce the product of Comparative Example J.  The results of analyses of these solids obtained are given in Table 2.

**Table 2**

| Comp Example | Amount of SiCl$_4$ (cm$_3$) | TiCl$_4$ Treatment (b) | Analysis (mg atoms/l) (e) | | | Empirical Formula (d) | |
|---|---|---|---|---|---|---|---|
| | | | Mg | Ti | Cl | y | x |
| G | 10 | NIL | 17.5 | 31.0 | 142.0 | 3.5 | 0.57 |
| H | 10 | YES | 12.8 | 15.5 | 77.5 | 3.4 | 0.83 |
| I | 100 | NIL | 16.3 | 28.4 | 117.0 | 3.0 | 0.57 |
| J. | 100 | YES | 10.4 | 12.9 | 58.5 | 2.9 | 0.81 |

Notes to Table 2

(b) and (d) are as defined for Table 1.

(e) 25 cm$^3$ aliquot portions of the suspension were extracted with 100 cm$^3$ of 3 molar aqueous sulphuric acid.

## EXAMPLES 5 TO 8

Propylene was polymerised using the products of Examples 1 to 4 and Comparative Examples A to J.

The propylene used for the polymerisation had been purified by passing gaseous propylene in turn through a column (7.6 cm in diameter, 0.9 m in length) containing 1.6 mm granules of 'Alcoa' F1 alumina at 50-60°C, and then through a similar column containing BASF catalyst R3-11 (cupric oxide reduced to finely-divided metallic copper on a magnesium oxide support) at 40-50°C, condensing the issue gas and passing the liquid propylene through four columns (all 7.6 cm in diameter; two of 0.9 m in length, two of 1.8 m in length) at 25°C, each containing 1.6 mm pellets of Union Carbide 3A molecular sieves.

This treatment reduced the water content of the monomer from 5-10 ppm by volume to <1 ppm by volume and the oxygen content from 1-2 ppm by volume to <0.5 ppm by volume. The level of inert compounds (nitrogen, ethane, etc) was unchanged at 0.3% and the level of unsaturated hydrocarbons (allene, methyl-acetylene etc) was unchanged at <1 ppm.

A polymerisation flask equipped with efficient stirrer and a water jacket was dried carefully and 1 litre of an inert hydrocarbon diluent (a $C_7$ fraction, essentially all of which had a boiling point in the range 99-102°C) was introduced. The diluent was evacuated at 40°C, purged with nitrogen and evacuated, which treatment reduced the water and oxygen contents of the diluent.

The diluent was then saturated with the purified propylene to one atmosphere pressure. 10 millimoles of tri-isobutyl aluminium were introduced into the polymerisation flask. After about 20 minutes, a quantity of a titanium chloride material, obtained as described in Examples 1 to 4 and Comparative Examples A to J, was introduced into the polymerisation flask. The pressure in the polymerisation flask was maintained at one atmosphere by supply of propylene. After a period of 3 hours from the introduction of the titanium chloride material, the run was terminated with 2 $cm^3$ of isopropanol and 2 $cm^3$ of propylene oxide, and a sample of supernatant liquid extracted for determining the concentration of soluble polymer dissolved in the polymerisation diluent. The remaining mixture was then subjected to steam distillation and the solid obtained was dried in a vacuum oven (pressure less than 10 mm of mercury) at 80°C until constant weight was achieved (at least 12 hours).

The results obtained are set out in Table 3.

# Table 3

| Example | Titanium Chloride | | Yield (g) of Polymer (f) | Mean Catalyst Activity (g polymer/mA Ti/hr at) | Wt % Polymer Soluble in diluent (h) |
|---|---|---|---|---|---|
| | Type | Amount (mM) | | | |
| K | A | 0.18 | 56 | 104 | 65 |
| 5 | 1 | 0.09 | 100 | 370 | 53 |
| L | B | 0.15 | 31 | 69 | 67 |
| 6 | 2 | 0.18 | 128 | 237 | 48 |
| M | C | 0.16 | 52 | 108 | 65 |
| 7 | 3 | 0.07 | 156 | 743 | 55 |
| N | D | 0.15 | 51 | 113 | 66 |
| 8 | 4 | 0.02 | 45 | 750 | 55 |
| O | E | 0.804 | 54.3 | 22.5 | 61 |
| P | F | 0.254 | 42.2 | 55 | 55 |
| Q | G | 0.5 | 25 | 16.6 | 57 |
| R | H | 0.5 | 54 | 35.9 | 54 |
| S | I | 0.5 | 23 | 15.3 | 61 |
| T | J | 0.5 | 48 | 31.9 | 52 |

0026655

30985

Notes to Table 3

(f)   Total yield of polymer, including that which is
      soluble.

(h) % based on total polymer (solid + soluble) formed.

### EXAMPLE 9

The procedure of Example 3 was repeated with the
exception that 50 cm$^3$ of titanium tetrachloride were
used.

### EXAMPLES 10 TO 15

The polymerisation procedure described for Examples 5
to 8 was repeated using the product of Example 9 with the
following modifications.  The polymerisation diluent was
an aliphatic hydrocarbon fraction consisting predominantly
of dodecane isomers, essentially all of which had a
boiling point in the range 170°C to 185°C.  The
polymerisation was effected at 60°C.  The organo-aluminium
component of the catalyst system was triethyl aluminium in
an amount of 8 millimoles.  In some of the
polymerisations, as indicated in Table 4, ethyl anisate
was also present as a catalyst component which was mixed
with the triethyl aluminium, in the polymerisation vessel
in the presence of propylene, for 10 minutes before adding
the titanium chloride material.

Further details of the polymerisation conditions, and
the results obtained, are set out in Table 4.

Table 4

| Example | Amount Titanium Chloride (mM) | Amount EA (i) (mM) | Yield (g) of Polymer (f) | Mean Catalyst Activity (g polymer/mA Ti/hr at) | Wt % Polymer Soluble in diluent (h) |
|---|---|---|---|---|---|
| 10 | 0.02 | NIL | 15 | 250 | 35 |
| 11 | 0.03 | 1.5 | 18 | 200 | 18 |
| 12 | 0.1 | 1.5 | 58 | 193 | 19 |
| 13 | 0.05 | 3 | 20 | 133 | 7 |
| 14 | 0.1 | 3 | 41 | 137 | 7 |
| 15 | 0.33 | 3.5 | 18 | 18 | 5.6 |

Notes to Table 4

(f)  and (h) are as defined in Notes to Table 3.

(i)  EA is ethyl anisate.

0026655

30985

## EXAMPLE 16

The procedure of Examples 1 to 4 was repeated with the following variations. A mixture of 15 cm$^3$ of titanium tetrachloride and 15 cm$^3$ of carbon tetrachloride was used. The mixture was heated to 70°C and 25 cm$^3$ of a 0.65 M solution of the magnesium dibutyl isomers was added. After filtering and washing as in Examples 1 to 4, the solid was suspended in 200 cm$^3$ of heptane. The suspension was divided into two 100 cm$^3$ portions.

One portion of the suspension was filtered and dried as described in Examples 1 to 4 and the dry solid was suspended in 35 cm$^3$ of titanium tetrachloride. The suspension was heated to 120°C and maintained at that temperature for 3 hours. The suspension was filtered and the solid washed and finally suspended in 100 cm$^3$ of heptane.

## EXAMPLE 17

The product of Example 16 was used to effect the polymerisation of ethylene. The polymerisation conditions were as described in Examples 5 to 8 but used ethylene rather than propylene, 1.3 cm$^3$ of triethyl aluminium (rather than tri-isobutyl aluminium), and sufficient of the product of Example 16 to provide 0.1 mM of titanium. After 3 hours' polymerisation, 38.9 grammes of polyethylene were obtained.

## COMPARATIVE EXAMPLE U

The procedure of Example 16 was repeated up to the separation of the suspension of the intermediate product into two 100 cm$^3$ portions with the exception that the reaction between the titanium tetrachloride, carbon tetrachloride and magnesium dibutyl was effected at ambient temperature.

One of the separated 100 cm³ portions was subjected to no further treatment and will be referred to as titanium chloride U.

## EXAMPLE 18

The remaining 100 cm³ portion obtained in Comparative Example U was filtered, dried, treated with titanium tetrachloride, washed and resuspended as described in the latter part of Example 16.

## COMPARATIVE EXAMPLE V

The procedure of Comparative Example U was repeated with the exception that only titanium tetrachloride and magnesium dibutyl were reacted together, and no carbon tetrachloride was used.

The surface areas and porosities of the products of Comparative Examples U and V and Example 18 were determined. The results are set out in Table 5.

Table 5

| Titanium Chloride | Surface Area $(m^2/g)$ | Porosity $(cm^3/g)$ |
|---|---|---|
| U | 196 | 0.37 |
| 18 | 351 | 0.59 |
| V | 69 | 0.17 |

## COMPARATIVE EXAMPLE W

50 cm³ of carbon tetrachloride were introduced into a nitrogen purged 300 cm³ vessel fitted with a stirrer and a 50 mm diameter No. 2 glass sinter. The liquid was stirred. 2.87 cm³ of ethyl benzoate were added, followed by 3.0 cm$^3$ of titanium tetrachloride.  A bright
yellow precipitate formed.  After 10 minutes, there were
added 45 cm$^3$ of a 0.66 molar solution of the magnesium
dibutyl isomers in the heptane fraction used in
Example 17.  The precipitate turned light green and the
temperature rose to 65°C (without applying external
heating).  The mixture was filtered, washed three times
using 100 cm$^3$ of the heptane fraction for each wash and
sufficient of the heptane fraction was added to give a
total volume of 100 cm$^3$.

### EXAMPLE 19

The procedure of Comparative Example W was repeated,
with the exception that the washed solid was not finally
resuspended but was treated as described hereafter.  The
solid was dried in a stream of pure argon for 19.5 hours,
then heated to 120°C at which temperature, 30 cm$^3$ of
titanium tetrachloride were added, still under argon.
After 3 hours at 120°C the mixture was cooled, filtered
and the solid washed three times using 100 cm$^3$ of the
heptane fraction for each wash.  The solid was then
suspended in 100 cm$^3$ of the heptane fraction.

### EXAMPLE 20 AND COMPARATIVE EXAMPLE X

The procedure of Comparative Example W was repeated
with the exception that ethyl benzoate was not used
(Comparative Example X).  The procedure of Example 19 was
repeated with the exception that ethyl benzoate was not
used (Example 20).

### EXAMPLES 21 AND 22

The polymerisation procedure of Examples 5 to 8 was
repeated using the products of Examples 19 and 20 and
Comparative Examples W and X, with the exceptions that
different quantities of the titanium chloride and
different polymerisation times were used.  Further details
and the results obtained are set out in Table 6.

Table 6

| Example or Comp Example | Titanium Chloride | | Time (hrs) | Yield (g) of Polymer (f) | Wt % Polymer Soluble in diluent (h) | Mean Catalyst Activity (g/mA Ti/hr at) (i) |
|---|---|---|---|---|---|---|
| | Type | Amount (mM) | | | | |
| 21 | 19 | 1.25 | 2 | 103.6 | 9.3 | 41    (37) |
| Y | W | 2.18 | 5 | 23.4 | 7.7 | 2 |
| 22 | 20 | 0.046 | 3 | 28.2 | 47.5 | 203  (107) |
| Z | X | 0.058 | 3 | 26.2 | 56.0 | 151   (66) |

Notes to Table 6

(f) and (h) are as defined in Notes to Table 3.

(i) The results given in brackets represent the activity for the production of solid (insoluble) polymer only.

## EXAMPLES 23 TO 27

A series of titanium chloride materials was prepared using the procedure described in Example 16 with the exception that the temperature of mixing the titanium tetrachloride, the magnesium dibutyl solution and the halocarbon compound was varied and, in some experiments, the carbon tetrachloride was replaced by an equivalent molar quantity of carbon tetrabromide. The products obtained were used to polymerise propylene using the procedure of Examples 5 to 8. Details of the titanium chloride preparation and the polymerisation results are summarised in Table 7.

## Table 7

| Ex | Mixing Temp (°C) | Halocarbon | TiX amount (mM) (j) | Yield (g) of polymer (f) | Wt % Polymer Soluble in diluent (h) |
|---|---|---|---|---|---|
| 23 | -50 | $CCl_4$ | 0.22 | 84.3 | 46 |
| 24 | 20 | $CCl_4$ | 0.04 | 28.0 | ND |
| 25 | 20 | $CBr_4$ | 0.04 | 26.6 | 67 |
| 26 | 65 | $CCl_4$ | 0.01 | 13.1 | 45 |
| 27 | 65 | $CBr_4$ | 0.04 | 8.1 | ND |

Notes to Table 7

(f) and (h) are as defined in Notes to Table 3.

(j) TiX means titanium halide.

## EXAMPLES 28 TO 30

The procedure of Examples 1 to 4 was repeated using halocarbon compounds other than carbon tetrachloride and mixing the titanium chloride and halocarbon compound with the magnesium dibutyl at various temperatures. The intermediate products were dried with a stream of nitrogen at 100°C for four hours. The dried solid was suspended in 30 cm$^3$ of titanium tetrachloride and the mixture was stirred for three hours, the initial period of stirring being at ambient temperature with the temperature being raised to 120°C and maintained at 120°C for the last hour. Further details of the preparations are set out in Table 8.

## Table 8

| Example | Halocarbon Treatment | | |
|---------|----------|--------|-----------|
|         | Type (k) | Amount | Temp (°C) (1) |
| 28 | $C_2Cl_6$* | 60 g | 80 |
| 29 | $CHCl_3$ | 50 cm$^3$ | A |
| 30 | $CH_2Cl_2$ | 50 cm$^3$ | 65 |

Notes to Table 8

(k)  * Using $C_2Cl_6$, the intermediate product was washed three times with toluene and then washed with heptane.

(1)   A indicates ambient temperature.

### EXAMPLES 31 TO 33

The products of Examples 28 to 30 were used to polymerise propylene using the procedure of Examples 5 to 8 with the exception that the polymerisation medium was an aliphatic hydrocarbon fraction consisting essentially of dodecane isomers essentially all of which have a boiling point in the range 170°C to 180°C.  The
polymerisation results are summarised in Table 9.

## Table 9

| Ex | Titanium chloride | | Mean Catalyst Activity (g polymer/mA Ti/hr at) | Wt % Polymer Soluble in diluent (h) |
|---|---|---|---|---|
| | Type | Amount (mM) | | |
| 31 | 28 | 0.26 | 70 | 52.1 |
| 32 | 29 | 0.48 | 49.7 | 47.4 |
| 33 | 30 | 0.89 | 30.0 | 51.8 |

Notes to Table 9

(h) is as defined in Notes to Table 3.

CLAIMS

1.   A titanium halide material having the composition $TiCl_y xMgCl_2$ wherein

y has a value of 1.2 to 2.9; and

x has a value of at least 4.

2.   A titanium halide material as claimed in claim 1 wherein x has a value of at least 6 and not more than 10.

3.   A titanium halide material as claimed in either claim 1 or claim 2 which has a surface area of at least 200 $m^2/g$ and a porosity of at least 0.40 $cm^3/g$.

4.   A titanium halide material containing titanium, magnesium and halogen atoms which has a surface area of at least 200 $m^2/g$ and a porosity of at least 0.40 $cm^3/g$.

5.   A process for the preparation of a titanium halide material which comprises

1)   forming a mixture of titanium tetrachloride and a halocarbon compound, which halocarbon compound may contain hydrogen, wherein the proportion of the halocarbon compound is at least 10% by volume of the total volume of the mixture;

2)   reacting the mixture with an organo-magnesium material;

3)   treating the reaction product from stage 2) with titanium tetrachloride; and

4)   separating a solid product from the titanium tetrachloride.

6.   A process as claimed in claim 5 wherein, between stage 2) and stage 3) a solid reaction product is separated from the reaction mixture of stage 2), the solid reaction product is dried and the dried solid reaction product is subjected to stage 3).

7.   A process as claimed in either claim 5 or claim 6 wherein the halocarbon compound contains at least three halogen atoms attached to one carbon atom.

0026655

8.    A process as claimed in claim 7 wherein the halocarbon compound is carbon tetrachloride.

9.    A process as claimed in any one of claims 5 to 8 wherein the organo-magnesium material is a dihydrocarbyl magnesium compound.

10.   A process as claimed in any one of claims 5 to 9 where the reaction product from stage 2) is treated with neat titanium tetrachloride and the mixture is heated to a temperature in the range from 60°C up to 150°C.

11.   A process as claimed in claim 6 wherein the solid reaction product is dried to give a free-flowing powder.

12.   A process as claimed in any one of claims 5 to 11 wherein a Lewis Base compound is incorporated into the titanium halide material at one or more of the stages during the preparation of the titanium halide material.

13.   An olefin polymerisation catalyst which is obtained by mixing together

1)    a titanium halide material as claimed in any one of claims 1 to 3 or claim 4, or whenever produced by the process of any one of claims 5 to 12; and

2)    at least one organo-metallic compound of aluminium or of a non-transition metal of Group IIA of the Periodic Table, or a complex of an organo-metallic compound of a non-transition metal of Group IA or IIA with an organo-metallic compound of aluminium.

14.   A catalyst as claimed in claim 13 wherein component 2) is an organo-aluminium compound containing only hydrocarbyl groups.

15.   A catalyst as claimed in either claim 13 or claim 14 which additionally contains a Lewis Base compound and/or a cyclic polyene.

16.   A process for the production of a polymer or copolymer of an olefin monomer wherein at least one olefin monomer is contacted under polymerisation conditions with an olefin polymerisation catalyst as claimed in any one of claims 13 to 15.

# EUROPEAN SEARCH REPORT

**European Patent Office**

Application number

EP 80 30 3400

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A - 2 324 652 (MONTEDISON)<br>* Claims 1-4,6,8,9,11-13; page 6, lines 7-15 *<br>& US - A - 4 115 319<br>-- | 5,7-9,<br>12-16 | C 08 F 10/00<br>4/64 |
| | GB - A - 1 498 862 (SUMITOMO)<br>* Claims 1-15; example 1 *<br>-- | 5,6,9-<br>16 | |
| A | GB - A - 1 550 980 (MONTEDISON)<br>* Claims 1-14 *<br>-- | 5,10,<br>13,16 | **TECHNICAL FIELDS SEARCHED (Int. Cl.³)** |
| E | EP - A - 0 019 330 (SHELL)<br>* Claims 1-18; page 3, line 31 - page 4, line 26; page 5, lines 1-25; example 4 *<br>-- | 1-16 | C 08 F 10/00-<br>10/14<br>110/00-<br>110/14<br>210/00-<br>210/18<br>4/64<br>4/62 |
| P,E | EP - A - 0 007 094 (B.A.S.F.)<br>* Claim *<br>-- | 5,13,<br>14,16 | |
| | FR - A - 2 326 429 (NIPPON OIL)<br>* Claims 1,2,4,5; page 2, line 15 - page 3, line 35; page 5, lines 24-37 *<br>& CA - A - 1 081 200<br>---- | 5,8,<br>10-16 | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

The present search report has been drawn up for all claims

| Place of search | Date of completion of the search | Examiner |
|---|---|---|
| The Hague | 12-12-1980 | WEBER |

EPO Form 1503.1    06.78